(19) Europäisches Patentamt
European Patent Office
Office européen des brevets

(11) Veröffentlichungsnummer: **0 194 449 B1**

# (12) EUROPÄISCHE PATENTSCHRIFT

(45) Veröffentlichungstag der Patentschrift: **03.05.89**

(51) Int. Cl.⁴: **C 01 C 3/20**

(21) Anmeldenummer: **86101580.8**

(22) Anmeldetag: **07.02.86**

## (54) Verfahren zur Herstellung wässriger Ammoniumrhodanidlösungen.

(30) Priorität: **08.03.85 DE 3508404**

(43) Veröffentlichungstag der Anmeldung: **17.09.86 Patentblatt 86/38**

(45) Bekanntmachung des Hinweises auf die Patenterteilung: **03.05.89 Patentblatt 89/18**

(84) Benannte Vertragsstaaten: **AT BE DE FR GB IT NL**

(56) Entgegenhaltungen:
**DE-B- 1 592 341**
**DE-B- 2 362 923**
**FR-A- 905 943**
**US-A- 2 850 356**

(73) Patentinhaber: **Akzo Patente GmbH, Postfach 10 01 49 Kasinostrasse 19-23, D-5600 Wuppertal-1 (DE)**

(72) Erfinder: **Meyer, Gerhard, Dr. Dipl.-Chem., Blumenstrasse 26, D-8753 Obernburg (DE)**
Erfinder: **Sudheimer, Günter, Dr. Dipl.-Ing., Messeler Strasse 6, D-6100 Darmstadt (DE)**
Erfinder: **Zengel, Hans, Dr. Dipl.-Ing., Nordring 6, D-8751 Kleinwallstadt (DE)**
Erfinder: **Grothaus, Hans,, Dr. Dipl.-Chem., Kornblumenweg 1, D-5000 Köln 71 (DE)**

**EP 0 194 449 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur kontinuierlichen Herstellung wäßriger Ammoniumrhodanidlösungen durch Umsetzung von Ammoniak und Schwefelkohlenstoff in Gegenwart von Wasser unter Verwendung von Aktivkohle als Katalysator.

Rhodanide (Thiocyanate) in Form ihrer Alkali- oder Ammoniumsalze sind nicht nur im chemischen Labor häufig verwendete Chemikalien, sondern besitzen darüber hinaus eine erhebliche Bedeutung auch in anderen technischen Bereichen. So wird z.B. bei der Naßverspinnung von Polyacrylnitrilfasern häufig eine wäßrige Rhodanidlösung aus Fällbad benutzt. Auch können Rhodanide zur Herstellung von Polyacrylnitrillösungen verwendet werden. An die hierzu verwendeten Rhodanide werden hohe Reinheitsanforderungen gestellt.

Einige bekannte Verfahren zur Herstellung von Rhodaniden bestehen darin, daß zuerst eine wäßrige Lösung von Ammoniumrhodanid hergestellt wird. Diese kann dann in ebenfalls bekannter Weise zu festem Ammoniumrhodanid weiterverarbeitet oder mit dem Hydroxid eines Alkalimetalls zu Alkalimetallrhodanid umgesetzt werden.

Die Herstellung vom Ammoniumrhodanide bzw. wäßrigen Ammoniumrhodanidlösungen durch Umsetzung von Ammoniak und Schwefelkohlenstoff in Gegenwart von Wasser ist bereits seit langem bekannt. So wird in der US-PS 2 249 962 die Umsetzung von Ammoniak und Schwefelkohlenstoff in einem Kessel in Gegenwart von Wasser und eines Katalysators beschrieben. Als Katalysator dienen Fettsäuren, insbesondere Ölsäure oder Ammoniumfettsäuresalze, Kiefernöl oder höhere Alkohole. Die Reaktion wird in Gegenwart von Alkoholen als Lösungsvermittler durchgeführt. Von Nachteil bei diesem Verfahren ist einmal die Anwesenheit des Lösungsvermittlers, der nach Beendigung der Reaktion entfernt werden muß. Auch wirken die verwendeten Katalysatoren bei der Aufarbeitung des Reaktionsgemisches störend. Das Abtrennen der unerwünschten Bestandteile und das Reinigen des Endprodukts sind deshalb sehr aufwendig. Darüber hinaus muß der Katalysator häufig erneuert werden, außerdem bildet sich während der Reaktion Schwefel, der ebenfalls zu Aufarbeitungsproblemen führt. Da die Umsetzung in mehreren Stufen bei verschiedenen Temperaturen durchgeführt wird, ist die Verfahrenstechnik umständlich.

In der US-PS 2 850 356 wird die Umsetzung von Ammoniak und Schwefelkohlenstoff in einem Reaktor beschrieben, der aus drei Zonen besteht und mit einer Füllung, z.B. Raschig-Ringen versehen ist. Wenn auch in dieser Patentschrift die Rede davon ist, daß Verfahren zur Umsetzung von Ammoniak und Schwefelkohlenstoff bekannt sind, die unter Druck arbeiten, so wird für dieses Verfahren das Arbeiten unter Normaldruck empfohlen, allenfalls unter leicht erhöhtem Druck bis etwa 1,7 bar. Die Umsetzung wird so gefahren, daß sich in den drei Stufen (Zonen) Temperaturen von 35, 55 und 80°C einstellen. Das Verfahren arbeitet ohne Katalysator.

In der DE-AS 1 297 088 wird ein Verfahren beschrieben, bei dem Aktivkohle als Katalysator verwendet wird. Auch hier wird die Umsetzung in drei Stufen durchgeführt. In der DE-AS 1 592 341, welche eine Weiterentwicklung des in der DE-AS 1 297 038 beschriebenen Verfahrens darstellt, wird die Umsetzung mit gasförmigem Schwefelkohlenstoff bei Temperaturen von 70 bis 90°C beschrieben.

Die in den beiden zuletzt erwähnten Schriften beschriebenen Verfahren führen bereits zu hohen Reaktionsgeschwindigkeiten und hohen Ausbeuten an Ammoniumrhodanid mit Reinheiten von mehr als 99%.

Ständig steigende Anforderungen an die Qualität des Ammoniumrhodanids sowie an die Effektivität und Wirtschaftlichkeit des Herstellungsverfahrens führten jedoch zu der Forderung nach weiteren verbesserten und wirtschaftlicher arbeitenden Verfahren.

Aufgabe der Erfindung war es deshalb, ein Verfahren zu schaffen, das insbesondere gegenüber den in DE-AS 1 297 088 und DE-AS 1 592 341 beschriebenen Verfahren noch weitere Verbesserungen bezüglich der Reaktionsgeschwindigkeit, also der Raum-Zeit-Ausbeute mit sich bringt und ermöglicht, die Reinheit des gebildeten Ammoniumrhodanids noch weiter zu erhöhen.

Aufgabe der Erfindung war es ferner, ein Verfahren zur Verfügung zu stellen, das möglichst einfach kontinuierlich zu handhaben ist und mit geringerem Energieaufwand arbeitet, als das bei den bisher bekannten Verfahren der Fall ist.

Diese Aufgabe wird durch ein Verfahren zur kontinuierlichen Herstellung wäßriger Ammoniumrhodanidlösungen durch Umsetzung von Ammoniak und Schwefelkohlenstoff in Gegenwart von Wasser oder wäßrigen Ammoniumrhodanidlösungen unter Verwendung von Aktivkohle als Katalysator gelöst, das dadurch gekennzeichnet ist, daß man die Umsetzung von Ammoniak und Schwefelkohlenstoff und die Zersetzung entstehender Zwischenprodukte bei einer Temperatur von 90 bis 150°C und bei einem Druck im Bereich zwischen 2 und 7 bar durchführt. Vorzugsweise verwendet man zur Umsetzung gasförmigen Schwefelkohlenstoff. In einer vorteilhaften Ausführungsform des erfindungsgemäßen Verfahrens wird die Umsetzung von Ammoniak und Schwefelkohlenstoff sowie die Zersetzung der Zwischenprodukte bei einer Temperatur zwischen 110 und 120°C durchgeführt. Besonders bevorzugt ist ein Druckbereich von 5 bis 5,5 bar. Es ist vorteilhaft,die während der Umsetzung entstehenden Zwischenprodukte in situ zu zersetzen. Die Umsetzung von Ammoniak und Schwefelkohlenstoff und die Zersetzung der Zwischenprodukte können in einer Zone durchgeführt werden, wobei man in der Zone während der Umsetzung und der Zersetzung vorteilhaft gleichbleibende Temperatur und gleichbleibenden Druck einhält und die Reaktionszone auf die gesamte Katalysatorschüttschicht ausdehnt. Besonders vorteilhaft ist es, wenn man die bei der Umsetzung von Ammoniak un Schwefelkohlenstoff freiwerdende Wärme zur Zersetzung der entstehenden Zwischenprodukte ausnützt.

Die resultierende Ammoniumrhodanidlösung kann kontinuierlich abgezogen und auf Normaldruck entspannt werden, die dabei entweichenden Gase können in Wasser gelöst und wieder der Umsetzung zugeführt werden. Die resultierende Ammoniumrhodanidlösung kann auch kontinuierlich abgezogen und auf Normaldruck entspannt werden, wobei die dabei entweichenden Gase komprimiert und wieder der Umsetzung zugeführt werden.

Es ist vorteilhaft, wenn man die wäßrige Ammoniumrhodanidlösung im Kreislauf führt und zur Ableitung von Reaktionswärme durch einen Wärmeaustauscher leitet. In einer besonders vorteilhaften Ausführungsform des erfindungsgemäßen Verfahrens wird zur Umsetzung von Schwefelkohlenstoff und Ammoniak ein Schüttschichtreaktor mit Kreislaufführung der Ammoniumrhodanidlösung eingesetzt. Ammoniak kann flüssig in das Reaktionsgefäß dosiert werden. Ammoniak kann auch gasförmig in das Reaktionsgefäß dosiert werden. Vorteilhafterweise wird Ammoniak flüssig oder gasförmig in den Ammoniumrhodanidkreislauf eindosiert. Ammoniak bzw. eine wäßrige, Ammoniumrhodanid enthaltende Ammoniaklösung kann mit Schwefelkohlenstoff im Gegenstrom in das Reaktionsgefäß dosiert werden. Ammoniak bzw. eine wäßrige, Ammoniumrhodanid enthaltende Lösung kann auch mit Schwefelkohlenstoff im Gleichstrom in das Reaktionsgefäß dosiert werden.

Bevorzugt wird die Menge von eingesetztem Wasser so bemessen, daß die resultierende wäßrige Ammoniumrhodanidlösung 40 bis 50 Gew.-% Ammoniumrhodanid enthält.

Das erfindungsgemäße Verfahren besteht somit darin, daß man einem geeigneten Reaktor, der die gewünschte Menge Aktivkohle enthält, Schwefelkohlenstoff, Ammoniak und Wasser kontinuierlich zuführt und die bei der Umsetzung gebildete Ammoniumrhodanidlösung kontinuierlich abzieht. Ammoniak und Schwefelkohlenstoff werden vorzugsweise dabei vor ihrer Einspeisung in den Reaktor auf den im Reaktor herrschenden Druck und auf die im Reaktor herrschende Temperatur gebracht. Vorzugsweise wird der Schwefelkohlenstoff vollständig vor dem Eindosieren verdampft. Ammoniak kann flüssig oder gasförmig eindosiert werden.

Im Sinne der Erfindung bedeutet gasförmiger Schwefelkohlenstoff, wie er in einer bevorzugten Ausführungsform verwendet wird, daß im Reaktor der Schwefelkohlenstoff einen Partialdruck aufweist, unter dem Schwefelkohlenstoff gasförmig ist. Die Dampfdruckwerte von Schwefelkohlenstoff in Abhängigkeit von der Temperatur sind z.B. in Ullmanns Encyklopädie der technischen Chemie 4. Auflage, Verlag Chemie Weinheim, Band 21, Seite 87 ff. wiedergegeben.

Gleichbleibende Temperatur und gleichbleibender Druck im Sinne der Erfindung, wie sie bei einer besonders vorteilhaften Ausführungsform des erfindungsgemäßen Verfahrens eingehalten werden, bedeutet, daß in der Reaktorzone ausgeglichene (homogene) Druck- und Temperaturverhältnisse vorliegen, wobei selbstverständlich übliche durch Apparatur und Regeltechnik bedingte Schwankungen toleriert werden.

Zone im Sinne der Erfindung ist ein räumlicher Abschnitt in einem Reaktor, in dem sich unter im wesentlichen gleichbleibenden Verhältnissen ein bestimmter Vorgang abspielt. So ist z.B. der in der DE-AS 1 297 088 dargestellte Reaktor in Form eines Reaktionsrohres in drei Zonen aufgeteilt, nämlich in die Zone c, in der in einer ersten Stufe die Reaktion zwischen Ammoniak und Schwefelkohlenstoff stattfindet, in eine Zone b, die zur Einspeisung von Ammoniak und Schwefelkohlenstoff dient und in eine Zone a, bei der die Zersetzung von Dithiocarbamat und Trithiocarbonat stattfindet.

Das erfindungsgemäße Verfahren wird vorzugsweise in einer die gesamte Katalysatorschnittschicht beinhaltenden Zone durchgeführt, kann jedoch grundsätzlich auch in einer Vorrichtung durchgeführt werden, wie sie schematisch in Abbildung 1 wiedergegeben ist. Dabei kann z.B. die Zone c mit Aktivkohle gefüllt sein, um die Umsetzung von Ammoniak und Schwefelkohlenstoff zu katalysieren. Durch eine oder mehrere Zudosierungsleitungen 18 können die benötigten Ausgangsstoffe in eine Zone b dosiert werden. In der Zone a kann die Zersetzung von Ammoniumthiocarbamat und Ammoniumtrithiocarbonat durchgeführt werden. Die Leitung 19 dient zum Ableiten der entstandenen Ammoniumrhodanidlösung. Durch die Leitung 20 werden die Abgase wie Schwefelwasserstoff sowie nicht umgesetzter Schwefelkohlenstoff usw. abgeleitet.

Im Reaktor laufen dabei im wesentlichen folgende Reaktionen ab:

Hauptreaktionen:

1. 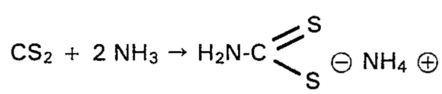

2. 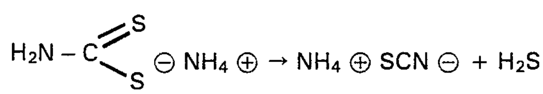

Nebenreaktionen:

3. $2NH_3 + CS_2 + H_2S \rightarrow (NH_4)_2\,CS_3$

4. $(NH_4)_2\,CS_3 \rightarrow NH_4\,SCN + H_2S$

Der erste (exotherme) Schritt der Umsetzung ist eine Addition eines Moleküls Ammoniak an ein Molekül Schwefelkohlenstoff, wobei mit einem weiteren Molekül Ammoniak Ammoniumdithiocarbamat gebildet wird. Das Ammoniumdithiocarbamat wird im (endothermen) zweiten Schritt zu Ammoniumrhodanid und Schwefelwasserstoff zersetzt.

In Nebenreaktionen wird aus Ammoniak, Schwefelkohlenstoff und Schwefelwasserstoff Ammoniumtrithiocarbonat gebildet und in situ bei den angegebenen Temperaturen zu Ammoniumrhodanid und Schwefelwasserstoff zersetzt.

Der Schwefelwasserstoff wird am Ende der Katalysatorschüttschicht abgezogen und kann einer Claus-Anlage zugeführt werden. Da eine solche Anlage im Normalfall ebenfalls unter erhöhtem Druck arbeitet, kann eine Komprimierung oder Entspannung des abgezogenen Schwefelwasserstoffs entfallen.

Da eine bevorzugte Ausführungsform des erfindungsgemäßen Verfahrens, wie unten näher erläutert, darin besteht, etwas weniger als die stöchiometrische Menge an Ammoniak einzusetzen, enthält der aus dem Reaktor abgezogene Schwefelwasserstoff dann noch etwas Schwefelkohlenstoff sowie etwas Wasser.

Das dem Reaktor zugespeiste Wasser sollte frei von Sauerstoff sein, um zu verhindern, daß der gebildete Schwefelwasserstoff teilweise zu Schwefel oxidiert wird, welcher sich auf dem Katalysator ablagern würde.

Die Verwendung von Wasser bei der Umsetzung hat in erster Linie den Zweck, das gebildete Ammoniumrhodanid als Lösung von der Oberfläche der Aktivkohle und aus dem Reaktor zu entfernen.

In einer bevorzugten Ausführungsform des erfindungsgemäßen Verfahrens wird die kontinuierlich abgezogene Ammoniumrhodanidlösung auf Normaldruck entspannt, und die dabei entweichenden Gase werden in Wasser gelöst und wieder der Umsetzung zugeführt. Diese Gase bestehen aus geringen Mengen Schwefelwasserstoff und Ammoniak. Auf diese Weise wird vollständiger Umsatz des eingesetzten Ammoniaks erzielt. Es wurde überraschenderweise gefunden, daß auch bei Anwendung von Drucken von 2-7 bar bei der Umsetzung die gebildete Ammoniumrhodanidlösung nur relativ geringe Mengen an gelöstem $H_2S$ und $NH_3$ enthielt. Die Gesamtmenge dieser Gase betrug beispielsweise bei 5,5 bar maximal 1 Gew.-%, bezogen auf das Gewicht der Lösung. Diese Menge läßt sich quantitativ durch Entspannen auf Normaldruck entfernen.

Die von Gasen befreite Ammoniumrhodanidlösung kann in gewünschter Weise weiterverarbeitet werden, z.B. zu Alkalimetallrhodanid oder zu festem Ammoniumrhodanid.

Erfindungsgemäß wird die Umsetzung bei einem Druck im Bereich zwischen 2 und 7 bar, also einem höheren Druck als Normaldruck (der etwa 1 bar beträgt), durchgeführt. Durch die Anwendung eines höheren Drucks werden Vorteile gegenüber einem bei Normaldruck durchgeführten Verfahren erzielt, die unten beschrieben werden. Diese Vorteile sind bereits bei nur relativ geringen Überdruckwerten, z.B. bereits bei einem Druck von 2 bar zu erzielen; sie treten jedoch bei Drucken von etwa 3 bar und mehr noch ausgeprägter zutage. Bei sehr hohen Drucken andererseits läßt sich keine wesentliche Verbesserung mehr erzielen, so daß u.a. wirtschaftliche Gründe gegen die Anwendung sehr hoher Drucke sprechen. Als besonders günstig hat es sich erwiesen, das erfindungsgemäße Verfahren bei einem Druck im Bereich von 5 bis 5,5 bar durchzuführen. Es wurde gefunden, daß bei Drucken, die in diesem Bereich liegen, die Raum-Zeit-Ausbeute an Ammoniumrhodanid gegenüber der Arbeitsweise unter Normaldruck nahezu verdoppelt werden kann. Dies wird darauf zurückgeführt, daß bei höheren Drucken die Belegung der Katalysatoroberfläche mit Ammoniak und Schwefelkohlenstoff und damit die Reaktionsgeschwindigkeit erhöht wird.

Vor Durchführung der Versuche, die zu dem erfindungsgemäßen Verfahren führten, konnte man andererseits nicht ausschließen, daß bei erhöhten Drucken der gebildete Schwefelwasserstoff den Katalysator stark belegen und nur langsam desorbiert würde, was zu geringen Raum-Zeit-Ausbeuten geführt hätte. Ein Vergleich der Adsorptionsisothermen von Schwefelkohlenstoff, Ammoniak und Schwefelwasserstoff für die Aktivkohletypen Supersorbon WS und IV bei 20°C zeigt z.B., daß Schwefelwasserstoff in weiten Konzentrationsbereichen besser adsorbiert wird als Ammoniak. Diese erwartete Verlangsamung der Reaktionsgeschwindigkeit, die gegen die Anwendung von erhöhtem Druck gesprochen hätte, wurde überraschenderweise nicht beobachtet.

Die Anwendung erhöhten Drucks bei der Umsetzung führt nicht nur zu einer schnelleren Adsorption und erhöhten Belegung des Katalysators, sondern sie ermöglicht auch die Einstellung höherer Umsetzungstemperaturen, als sie bei einem Verfahren mit Aktivkohle unter Normaldruck anwendbar sind. Arbeitet man unter Normaldruck, so liegt die obere Temperaturgrenze, die man zweckmäßigerweise nicht überschreitet, für den ersten Reaktionsschritt der Addition von Ammoniak an Schwefelkohlenstoff im oberen Reaktorbereich bei etwa 90°C. Bei Anwendung höherer Drucke dagegen läßt sich die Temperatur auf 100°C und mehr steigern, ohne daß es zu einem Abfall der Raum-Zeit-Ausbeute kommt.

Auf der anderen Seite führt jedoch die höhere Temperatur zu einer Erhöhung der Geschwindigkeit der Addition von Ammoniak an Schwefelkohlenstoff. Die Einstellung einer höheren Temperatur bereits für den Schritt der Addition bringt aber noch einen weiteren Vorteil: Da für die (endotherme) Zersetzung des Ammoniumdithiocarbamats höhere Temperaturen wünschenswert sind als für die Addition von $NH_3$ an $CS_2$, kann man im gesamten Reaktor einheitliche Temperaturen aufrechterhalten. Es bedarf dann nicht einer Unterteilung des Reaktors in verschiedene Temperaturzonen. Diese Unterteilung in mehrere Zonen ist beim Verfahren mit Normaldruck üblich, da dort der Reaktionsschritt der Addition von $NH_3$ an $CS_2$ bei einer niedrigeren Temperatur durchgeführt wird als die Zersetzung des Ammoniumdithiocarbamats.

Eine bevorzugte Ausführungsform des erfindungsgemäßen Verfahrens ist dadurch gekennzeichnet, daß die Umsetzung bei Temperaturen zwischen 100°C und 130°C durchgeführt wird. Die untere Grenze von 100°C ergibt sich bei dieser Ausführungsform aus der erwähnten Tatsache, daß oberhalb dieser Temperatur das im ersten Schritt gebildete Ammoniumdithiocarbamat sich in kurzer Zeit quantitativ zu Ammoniumrhodanid zersetzt. Die obere Grenze von 130°C wird zweckmäßigerweise deshalb eingehalten, da oberhalb dieser Temperatur verstärkt Nebenreaktionen beobachtet wurden.

Wird das erfindungsgemäße Verfahren in der beschriebenen bevorzugten Ausführungsform durchgeführt, wonach bei einer einheitlichen Temperatur im Bereich zwischen 100°C und 130°C gearbeitet wird, so ergibt sich gegenüber einem drucklosen Verfahren mit unterschiedlichen Temperaturzonen ein weiterer Vorteil. Dieser besteht darin, daß die Addition des Ammoniaks an Schwefelkohlenstoff bei einer Temperatur erfolgt, bei der sich Ammoniumdithiocarbamat und Ammoniumtrithiocarbonat an der Katalysatoroberfläche in statu nascendi zersetzt. Dies ist vorteilhaft, da bei längerer Verweilzeit aus dem Reaktionsgemisch Nebenprodukte, wie z.B. Thioharnstoff gebildet werden können. Das Ausmaß dieser zu Thioharnstoff führenden Nebenreaktionen steigt mit der Verweilzeit und höheren Temperaturen an. Bei dem erfindungsgemäßen Verfahren läßt sich eine höhere Reinheit des Ammoniumrhodanids erzielen als mit bekannten Verfahren.

Bei dem erfindungsgemäßen Verfahren läßt sich, wenn es bei einer Temperatur im Bereich von 110°C bis 120°C durchgeführt wird, Ammoniumrhodanid einer Reinheit von mindestens 99,7% erhalten. Eine bevorzugte Ausführungsform des Verfahrens besteht somit darin, die Umsetzung bei einer Temperatur im Bereich zwischen 110°C und 120°C durchzuführen.

Da der erste Schritt der Reaktion, die Addition des Ammoniaks an Schwefelkohlenstoff, exotherm und der zweite Schritt, der zu Rhodanid führt, endotherm ist, verwendet man zweckmäßigerweise die im ersten Schritt freiwerdende Wärme zur Zersetzung des Ammoniumdithiocarbamats. Die Arbeitsweise in einem einstufigen Verfahren, bei dem im Reaktor eine einheitliche Temperatur herrscht, gestattet es somit, ohne aufwendige externe Vorrichtungen zur Erreichung unterschiedlicher Reaktionstemperaturen zu arbeiten. Die Betriebstemperatur wird durch die im System selbst erzeugte Wärme aufrechterhalten. Dies ermöglicht die Verwendung eines relativ billigen Schüttschichtreaktors.

Eine bevorzugte Ausführungsform des erfindungsgemäßen Verfahrens besteht darin, die entstehende Wärme durch einen Ammoniumrhodanidkreislauf mit Wärmeaustauschern abzuführen. Die überschüssige Wärme resultiert zum größten Teil aus der Lösungswärme von gasförmigem Ammoniak in der Reaktionslösung und kann besonders einfach abgeführt werden, wenn gasförmiges Ammoniak bereits außerhalb des Reaktors in den Ammoniumrhodanidkreislauf dosiert wird.

Führt man dagegen, wie in bekannten Verfahren beschrieben, die Stufen der Addition und der Zersetzung in getrennten Reaktoren durch müssen wegen der hierbei erforderlichen Maßnahme der Wärmezubzw. -abführung teurere Vorrichtungen, wie z.B. Rohrbündelreaktoren verwendet werden.

Aufgrund der stöchiometrischen Gleichung der Gesamtreaktion setzen sich zwei Moleküle Ammoniak mit einem Molekül Schwefelkohlenstoff zu Ammoniumrhodanid und Schwefelwasserstoff um. Man kann demnach diese beiden Komponenten im stöchiometrischen Molverhältnis, d.h. im Verhältnis 2:1 einsetzen. Eine bevorzugte Ausführungsform des Verfahrens besteht jedoch darin, einen gewissen Unterschuß an Ammoniak zu verwenden, d.h. das molare Verhältnis Ammoniak zu Schwefelkohlenstoff auf Werte zwischen 2:1,02 bis 2:1,1 einzustellen.

Auf diese Weise reduziert bzw. vermeidet man die Bildung kleiner Mengen Ammoniumsulfid aus Ammoniak und dem bei der Umsetzung enstehenden Schwefelwasserstoff.

Je nach den gewählten Werten von Druck und Temperatur liegt der Schwefelkohlenstoff im Reaktor zum Teil flüssig oder gasförmig vor. Vorzugsweise arbeitet man unter Bedingungen, bei denen der Schwefelkohlenstoff gasförmig vorliegt. Druck und Temperatur müssen so gewählt werden, daß das in dem Reaktor vorhandene Wasser im flüssigen Zustand vorliegt und so eine Lösung vom Ammoniumrhodanid gebildet werden kann.

Die als Katalysator dienende Aktivkohle wird vorzugsweise in gekörnter Form eingesetzt. Man füllt hierbei z.B. einen Schüttschichtreaktor mit der gewünschten Menge an gekörnter Aktivkohle und erzeugt so eine Katalysatorschicht, die einerseits eine große Oberfläche aufweist und andererseits den Durchtritt von Gasen und Flüssigkeiten zuläßt.

Wieviel Aktivkohle im Reaktor vorhanden sein muß, um praktisch quantitativen Umsatz in kurzer Zeit zu erzielen, hängt von Verfahrensparametern ab und läßt sich im Einzelfall leicht durch Versuche ermitteln. Die erforderliche Menge an Aktivkohle hängt ab von Druck und Temperatur im Reaktor sowie von den kontinuierlich pro Zeiteinheit zudosierten Mengen an Ammoniak und Schwefelkohlenstoff.

Eine für das erfindungsgemäße Verfahren geeignete Aktivkohle stellt u.a. das Produkt Supersorbon K (Hersteller: Lurgi Umwelt und Chemotechnik GmbH), Körnung 4 mm, Rütteldichte 400 kg/m$^3$, BET Oberfläche 1200 m$^2$/g, dar.

Erfindungsgemäß können die Ausgangskomponenten, Schwefelkohlenstoff und Ammoniak bzw. ammoniakalische Ammoniumrhodanidlösung im Gleichstrom und im Gegenstrom dem Katalysatorbett zugeführt werden. Eine bevorzugte Ausführungsform des erfindungsgemäßen Verfahrens besteht darin, in o.g. Kreislaufstrom gelöstes Ammoniak und gasförmigen Schwefelkohlenstoff im Gleichstrom dem Katalysatorbett von oben zuzuführen und das sich bildende Abgas, Schwefelwasserstoff, nach der Katalysatorschicht mit einem Steigrohr durch einen Kühler zu leiten. Dadurch resultiert der Vorteil, hohe Gas- und Flüssigkeitsgeschwindigkeiten, bezogen auf die Katalysatorquerschnittsfläche, ohne ein Fluten des Reaktionsgefäßes anwenden zu können. Der Reaktordurchmesser einer technischen Anlage kann relativ klein gewählt werden mit dem Vorteil einer deutlichen Kosteneinsparung für einen der oben erwähnten Druckreaktoren. Bei einem Gegenstromverfahren sind die Gas- und Flüssigkeitsgeschwindigkeiten durch den Flutpunkt begrenzt mit der Folge eines notwendigen größeren Reaktordurchmessers.

Die Menge an kontinuierlich zudosiertem Wasser für den Abgaskühler und die Restgasabsorption wird in einer bevorzugten Ausführungsform des Verfahrens so bemessen, daß die resultierende Ammoniumrhodanidlösung 40 bis 50 Gew.-% Ammoniumrhodanid enthält. Bei niedrigeren Konzentrationen an Rhodanid wird die Weiterverarbeitung zu festem Produkt verteuert.

Die bei der Entspannung der wäßrigen Ammoniumrhodanidlösung auf Normaldruck entweichenden Gase können auch komprimiert werden und so der Umsetzung wieder zugeführt werden.

Eine weitere vorteilhafte Ausführungsform des erfindungsgemäßen Verfahrens wird anhand der Abbildung 2 beschrieben. Diese Abbildung gibt in vereinfachter schematischer Darstellung eine Vorrichtung wieder, in der diese Verfahrensvariante abläuft.

Schwefelkohlenstoff wird nach einem Verdampfer 1 bei Reaktionsdruck dem Reaktionsgefäß 2 oberhalb der Katalysatorschüttschicht 3 zugeführt. Ammoniak wird mit Ventil 4 auf den Reaktionsdruck entspannt, in einem Ammoniumrhodanidkreislauf gelöst und mit einem Verteilerring 5 auf die Katalysatorschicht gegeben. Das gebildete Abgas, Schwefelwasserstoff, wird in einem Steigrohr 6 einem Kühler 7 zugeführt, abgekühlt und an Ammoniak und Nebenprodukten ausgewaschen. Das dazu notwendige sauerstofffreie Wasser wird mit einer Pumpe 8 in den Abgaskühler und anschließend durch das Steigrohr in den Sumpf des Reaktors 9 dosiert. Das Abgas kann bei Reaktionsdruck über Ventil 10 einem Claus-Prozeß zur Wiederaufarbeitung zugeführt werden.

Die gebildete Ammoniumrhodanid-Lösung wird zur Abführung der Reaktionswärme mit Pumpe 11 und Wärmetauscher 12 im Kreislauf geführt.

Der Füllstand des Reaktorsumpfes 9 wird mit Ventil 13 geregelt. Die Ammoniumrhodanidlösung wird mit Ventil 14 vollständig an Ammoniak und Schwefelwasserstoff durch Entspannung auf Atmosphärendruck entgast. Die gereinigte Ammoniumrhodanidlösung kann dem Degaser 15 entnommen werden. Das Degaserabgas wird in einem Absorber in Wasser gelöst und mit einer Pumpe 17 dem Ammoniumrhodanidkreislauf zugeführt.

Bei dieser Reaktionsführung wird vorteilhafterweise nur eine Reaktorzone benötigt, die verfahrens- und regeltechnisch sehr einfach zu handhaben ist.

Es war besonders überraschend, daß man bei Anwendung des erfindungsgemäßen Verfahrens zu einer unerwarteten Steigerung der Raumzeitausbeute gelangt. Offenbar behindert der entstehende Schwefelwasserstoff unter den erfindungsgemäßen Temperatur- und Druckverhältnissen nicht die Katalysatorfunktion der Aktivkohle sondern steigert sie noch.

Es ist ferner bemerkenswert, daß das erfindungsgemäße Verfahren erlaubt, sowohl die Umsetzung von Schwefelkohlenstoff und Ammoniak als auch die Zersetzung der dabei entstehenden Zwischenprodukte an gleicher Stelle, d.h. in einer Zone durchzuführen, bei der man im wesentlichen gleichbleibende Temperatur und gleichbleibenden Druck einhält. Dies bedeutet eine erhebliche verfahrensmäßige Vereinfachung gegenüber den Verfahren gemäß dem bekannten Stand der Technik, wo in säulen- oder kolonnenartigen Reaktoren in drei Stufen bzw. drei verschiedenen Zonen gearbeitet wurde, in denen jeweils auch eine andere Temperatur einzuhalten war. Das erfindungsgemäße Verfahren läßt sich deshalb sehr einfach durchführen und bringt eine erhebliche Einsparung an Energiekosten, da die bei der Umsetzung freiwerdende Wärme sofort zum Zersetzen der entstehenden Zwischenprodukte ausgenützt werden kann. Die Reinheit der entstehenden Produkte wird noch verbessert, auch werden Ausbeutesteigerungen erzielt.

Das erfindungsgemäße Verfahren wird durch folgendes Beispiel veranschaulicht:

*Beispiel*

Ein thermostatisierbarer Glasautoklav 2 mit einem Innendurchmesser von 81 mm und einer Länge von 480 mm wird mit 611 g gekörnter Aktivkohle Supersorbon K (Körnung etwa 4 mm) gefüllt. Vor Versuchsbeginn wird die gesamte Anlage mit Inertgas sauerstofffrei gespült und sauerstofffreies Wasser in den Sumpf des Reaktors 9 über die Pumpe 8 eindosiert.

Der Glasautoklav muss bei den geringen Umsetzungen im Labormaßstab mit einem Wärmeträgeröl auf die Reaktionstemperatur von 115°C aufgeheizt werden. Die entstehende Reaktionswärme wird durch Strahlung im Fall der Laboranlage so gut abgeführt, daß ein separater Wärmetauscher 12 entfallen kann. Vor Reaktionsbeginn wird der gewünschte Druck mit Inertgas und der Kreislauf mit 80 l $h^{-1}$ eingestellt. Folgende Stoffströme werden eindosiert:

| | |
|---|---|
| Schwefelkohlenstoff | 94 g $h^{-1}$ |
| Ammoniakgas | 54 l $h^{-1}$ |
| Sauerstofffreies Wasser | |
| (Zuleitung in Abgaskühler) | 57 ml $h^{-1}$ |
| (Absorption des Degaserabgases) | 57 ml $h^{-1}$ |

Entsprechend der gewählten Menge Wasser wird eine etwa 45 gew.%ige Ammoniumrhodanidlösung aus dem Degaser 15 abgezogen.

Nach einer gelpermeationschromatographischen Trennung erhält man einen argentometrisch bestimmten Gehalt an Ammoniumrhodanid von 99,8%. Der kolorimetrisch analysierte Thioharnstoffgehalt liegt bei 0,2%. Die Ausbeute beträgt 92,6 g $h^{-1}$ Ammoniumrhodanid (99,6% der Theorie bezogen auf Ammoniak). Die Raum-Zeit-Ausbeute liegt bei 60,2 g Ammoniumrhodanid pro Stunde und Liter Katalysator.

**Patentansprüche**

1. Verfahren zur kontinuierlichen Herstellung wäßriger Ammoniumrhodanidlösungen durch Umsetzung vom Ammoniak und Schwefelkohlenstoff und Zersetzung entstehender Zwischenprodukte bei Temperaturen von 90 bis 150°C in Gegenwart von Wasser oder wäßrigen Ammoniumrhodanidlösungen unter Verwendung von Aktivkohle als Katalysator, dadurch gekennzeichnet, daß man die Umsetzung von Ammoniak und Schwefelkohlenstoff und die Zersetzung entstehender Zwischenprodukte bei einem Druck im Bereich zwischen 2 bis 7 bar durchführt.

2. Verfahren nach Anspruch 1, dadurch gekennzeichnet, daß man zur Umsetzung gasförmigen Schwefelkohlenstoff verwendet.

3. Verfahren nach einem der Ansprüche 1 und 2, dadurch gekennzeichnet, daß man die Umsetzung von Ammoniak und Schwefelkohlenstoff sowie die Zersetzung der Zwischenprodukte bei einer Temperatur zwischen 110 und 120°C durchführt.

4. Verfahren nach einem der Ansprüche 1 bis 3, dadurch gekennzeichnet, daß man die Umsetzung von Ammoniak und Schwefelkohlenstoff und die Zersetzung der Zwischenprodukte bei einem Druck im Bereich von 5 bis 5,5 bar durchführt.

5. Verfahren nach einem der Ansprüche 1 bis 4, dadurch gekennzeichnet, daß die während der Umsetzung entstehenden Zwischenprodukte in situ zersetzt werden.

6. Verfahren nach einem der Ansprüche 1 bis 5, dadurch gekennzeichnet, daß man die Umsetzung von Ammoniak und Schwefelkohlenstoff und die Zersetzung der Zwischenprodukte in einer Zone durchführt.

7. Verfahren nach Anspruch 6, dadurch gekennzeichnet, daß man in der Zone während der Umsetzung und der Zersetzung gleichbleibende Temperatur und gleichbleibenden Druck einhält.

8. Verfahren nach einem der Ansprüche 1 bis 7, dadurch gekennzeichnet, daß man die bei der Umsetzung von Ammoniak und Schwefelkohlenstoff freiwerdende Wärme zur Zersetzung der entstehenden Zwischenprodukte ausnützt.

9. Verfahren nach einem der Ansprüche 1 bis 8, dadurch gekennzeichnet, daß die resultierende Ammoniumrhodanidlösung kontinuierlich abgezogen und auf Normaldruck entspannt wird und daß die dabei entweichenden Gase in Wasser gelöst und wieder der Umsetzung zugeführt werden.

10. Verfahren nach einem der Ansprüche 1 bis 8, dadurch gekennzeichnet, daß die resultierende Ammoniumrhodanidlösung kontinuierlich abgezogen und auf Normaldruck entspannt wird und daß die dabei entweichenden Gase komprimiert und wieder der Umsetzung zugeführt werden.

11. Verfahren nach einem der Ansprüche 1 bis 10, dadurch gekennzeichnet, daß man wäßrige Ammoniumrhodanidlösung im Kreislauf führt und zur Ableitung von Reaktionswärme durch einen Wärmeaustauscher leitet.

12. Verfahren nach einem der Ansprüche 1 bis 11, dadurch gekennzeichnet, daß zur Umsetzung von Schwefelkohlenstoff und Ammoniak ein Schüttschichtreaktor mit Kreislaufführung der Ammoniumrhodanidlösung eingesetzt wird.

13. Verfahren nach einem der Ansprüche 1 bis 12, dadurch gekennzeichnet, dass Ammoniak flüssig in das Reaktionsgefäß dosiert wird.

14. Verfahren nach einem der Ansprüche 1 bis 12, dadurch gekennzeichnet, daß Ammoniak gasförmig in das Reaktionsgefäß dosiert wird.

15. Verfahren nach einem der Ansprüche 1 bis 12, dadurch gekennzeichnet, daß Ammoniak flüssig in den Ammoniumrhodanidkreislauf eindosiert wird.

16. Verfahren nach einem der Ansprüche 1 bis 12, dadurch gekennzeichnet, daß Ammoniak gasförmig in den Ammoniumrhodanidkreislauf eindosiert wird.

17. Verfahren nach einem der Ansprüche 1 bis 16, dadurch gekennzeichnet, daß Ammoniak bzw. eine wäßrige, Ammoniumrhodanid enthaltende Ammoniaklösung mit Schwefelkohlenstoff im Gegenstrom in das Reaktionsgefäß dosiert wird.

18. Verfahren nach einem der Ansprüche 1 bis 16, dadurch gekennzeichnet, daß Ammoniak bzw. eine wäßrige, Ammoniumrhodanid enthaltende Lösung mit Schwefelkohlenstoff im Gleichstrom in das Reaktionsgefäß dosiert wird.

19. Verfahren nach einem der Ansprüche 1 bis 18, dadurch gekennzeichnet, daß die Menge von eingesetztem Wasser so bemessen wird, daß die resultierende wäßrige Ammoniumrhodanidlösung 40 bis 50 Gew.-% Ammoniumrhodanid enthält.

20. Verfahren nach einem der Ansprüche 1 bis 19, dadurch gekennzeichnet, daß das molare Verhältnis von eingesetztem Ammoniak zu eingesetztem Schwefelkohlenstoff 2:1,02 bis 2:1,1 beträgt.

**Claims**

1. A process for the continuous production of aqueous ammonium thiocyanate solutions by reaction of ammonia and carbon disulfide and decomposition of intermediate products formed at temperatures of 90 to 150°C in the presence of water or aqueous ammonium thiocyanate solutions using active carbon as catalyst, characterized in that the reaction of ammonia and carbon disulfide and the decomposition of intermediate products formed are carried out under a pressure in the range from 2 to 7 bar.

2. A process as claimed in claim 1, characterized in that gaseous carbon disulfide is used for the reaction.

3. A process as claimed in claim 1 or 2, characterized in that the reaction of ammonia and carbon disulfide and the decomposition of the intermediate products are carried out at a temperature in the range from 110 to 120°C.

4. A process as claimed in any of claims 1 to 3, characterized in that the reaction of ammonia and carbon disulfide and the decomposition of intermediate products are carried out under a pressure of 5 to 5.5 bar.

5. A process as claimed in any of claims 1 to 4, characterized in that the intermediate products formed during the reaction are decomposed in situ.

6. A process as claimed in any of claims 1 to 5, characterized in that the reaction of ammonia and carbon disulfide and the decomposition of the intermediate products are carried out in one zone.

7. A process as claimed in claim 6, characterized in that a uniform temperature and a uniform pressure are maintained in the zone during the reaction and the decomposition.

8. A process as claimed in any of claims 1 to 7, characterized in that the heat released during the reaction of ammonia and carbon disulfide is utilized to decompose the intermediate products formed.

9. A process as claimed in any of claims 1 to 8, characterized in that the resulting ammonium thiocyanate solution is continuously run off and relaxed to normal pressure and in that the gases escaping are dissolved in water and returned to the reaction.

10. A process as claimed in any of claims 1 to 8, characterized in that the resulting ammonium thiocyanate solution is continuously run off and expanded to normal pressure and in that the gases escaping are compressed and returned to the reaction.

11. A process as claimed in any of claims 1 to 10, characterized in that aqueous ammonium thiocyanate solution is circulated and is passed through a heat exchanger to dissipate heat of reaction.

12. A process as claimed in any of claims 1 to 11,

characterized in that a granular bed reactor with circulation of the ammonium thiocyanate solution is used for the reaction of carbon disulfide and ammonia.

13. A process as claimed in any of claims 1 to 12, characterized in that ammonia is introduced in liquid form into the reaction vessel.

14. A process as claimed in any of claims 1 to 12, characterized in that ammonia is introduced in gaseous form into the reaction vessel.

15. A process as claimed in any of claims 1 to 12, characterized in that ammonia is introduced in liquid form into the ammonium thiocyanate circuit.

16. A process as claimed in any of claims 1 to 12, characterized in that ammonia is introduced in gaseous form into the ammonium thiocyanate circuit.

17. A process as claimed in any of claims 1 to 16, characterized in that ammonia or an aqueous ammonia solution containing ammonium thiocyanate is introduced into the reaction vessel in countercurrent to carbon disulfide.

18. A process as claimed in any of claims 1 to 16, characterized in that ammonia or an aqueous solution containing ammonium thiocyanate is introduced into the reaction vessel in co-current with carbon disulfide.

19. A process as claimed in any of claims 1 to 18, characterized in that the quantity of water used in gauged in such a way that the resulting aqueous ammonium thiocyanate solution containing 40 to 50% by weight ammonium thiocyanate.

20. A process as claimed in any of claims 1 to 19, characterized in that the molar ratio of ammonia used to carbon disulfide used is from 2:1.02 to 2:1.1.

**Revendications**

1. Procédé pour la production en continu de solutions aqueuses de sulfocyanure d'ammonium, par réaction d'ammoniac et de sulfure de carbone et décomposition des produits intermédiaires formés, à des températures de 90 à 150°C, en présence d'eau ou de solutions aqueuses de sulfocyanure d'ammonium, avec utilisation de charbon actif en tant que catalyseur, caractérisé par le fait que l'on effectue la réaction de l'ammoniac et du sulfure de carbone et la décomposition des produits intermédiaires formés, sous une pression dans la plage comprise entre 2 et 7 bars.

2. Procédé selon la revendication 1, caractérisé par le fait que, pour la réaction, on utilise du sulfure de carbone gazeux.

3. Procédé selon l'une des revendications 1 ou 2, caractérisé par le fait que l'on effectue la réaction de l'ammoniac et du sulfure de carbone, ainsi que la décomposition des produits intermédiaires, à une température comprise entre 110 et 120°C.

4. Procédé selon l'une des revendications 1 à 3, caractérisé par le fait que l'on effectue la réaction de l'ammoniac et du sulfure de carbone, et la décomposition des produits intermédiaires, sous une pression dans la plage de 5 à 5,5 bars.

5. Procédé selon l'une des revendications 1 à 4, caractérisé par le fait que les produits intermédiaires formés pendant la réaction sont décomposés in situ.

6. Procédé selon l'une des revendications 1 à 5, caractérisé par le fait que l'on effectue dans une zone la réaction de l'ammoniac et du sulfure de carbone, et la décomposition des produits intermédiaires.

7. Procédé selon la revendication 6, caractérisé par le fait que l'on maintient une température constante et une pression constante dans la zone pendant la réaction et la décomposition.

8. Procédé selon l'une des revendications 1 à 7, caractérisé par le fait que pour la décomposition des produits intermédiaires formés, on utilise la chaleur libérée lors de la réaction de l'ammoniac et du sulfure de carbone.

9. Procédé selon l'une des revendications 1 à 8, caractérisé par le fait que la solution de sulfocyanure d'ammonium résultante est en continu évacuée et détendue jusqu'à la pression normale, et par le fait que l'on dissout dans de l'eau les gaz se dégageant à cette occasion et on les renvoie à la réaction.

10. Procédé selon l'une des revendications 1 à 8, caractérisé par le fait que la solution de sulfocyanure d'ammonium résultante est en continu évacuée et détendue jusqu'à la pression normale, et par le fait que l'on comprime les gaz se dégageant à cette occasion et on les renvoie dans la réaction.

11. Procédé selon l'une des revendications 1 à 10, caractérisé par le fait que l'on met en circuit la solution aqueuse de sulfocyanure d'ammonium et on la fait passer dans un échangeur thermique, pour l'élimination de la chaleur de réaction.

12. Procédé selon l'une des revendications 1 à 11, caractérisé par le fait que pour la réaction su sulfure de carbone et de l'ammoniac, on utilise un réacteur à lit granulaire, avec mise en circuit de la solution de sulfocyanure d'ammonium.

13. Procédé selon l'une des revendications 1 à 12, caractérisé par le fait que l'on introduit de façon réglée l'ammoniac sous forme liquide, dans le récipient de réaction.

14. Procédé selon l'une des revendications 1 à 12, caractérisé par le fait que l'on introduit de façon réglée l'ammoniac à l'état gazeux, dans le récipient de réaction.

15. Procédé selon l'une des revendications 1 à 12, caractérisé par le fait que l'on introduit de façon réglée l'ammoniac sous forme liquide, dans le circuit de sulfocyanure d'ammonium.

16. Procédé selon l'une des revendications 1 à 12, caractérisé par le fait que l'on introduit de façon réglée l'ammoniac à l'état gazeux, dans le circuit de sulfocyanure d'ammonium.

17. Procédé selon l'une des revendications 1 à 16, caractérisé par le fait que l'on introduit, de façon reglée, de l'ammoniac ou une solution aqueuse d'ammoniac contenant du sulfocyanure d'ammonium, avec su sulfure de carbone, à contre-courant, dans le récipient de réaction.

18. Procédé selon l'une des revendications 1 à 16, caractérisé par le fait que l'on introduit, de façon réglée, de l'ammoniac ou une solution aqueuse d'ammoniac contenant du sulfocyanure d'ammonium, avec du sulfure de carbone, en écoulement cocourant, dans le récipient de réaction.

19. Procédé selon l'une des revendications 1 à 18, caractérisé par le fait que l'on ajuste la quantité d'eau introduite, de manière que la solution aqueuse de sulfocyanure d'ammonium résultante contienne de 40 à 50% en poids de sulfocyanure d'ammonium.

20. Procédé selon l'une des revendications 1 à 19, caractérisé par le fait que le rapport molaire de l'ammoniac utilisé au sulfure de carbone utilisé va de 2:1,02 à 2:1,1.

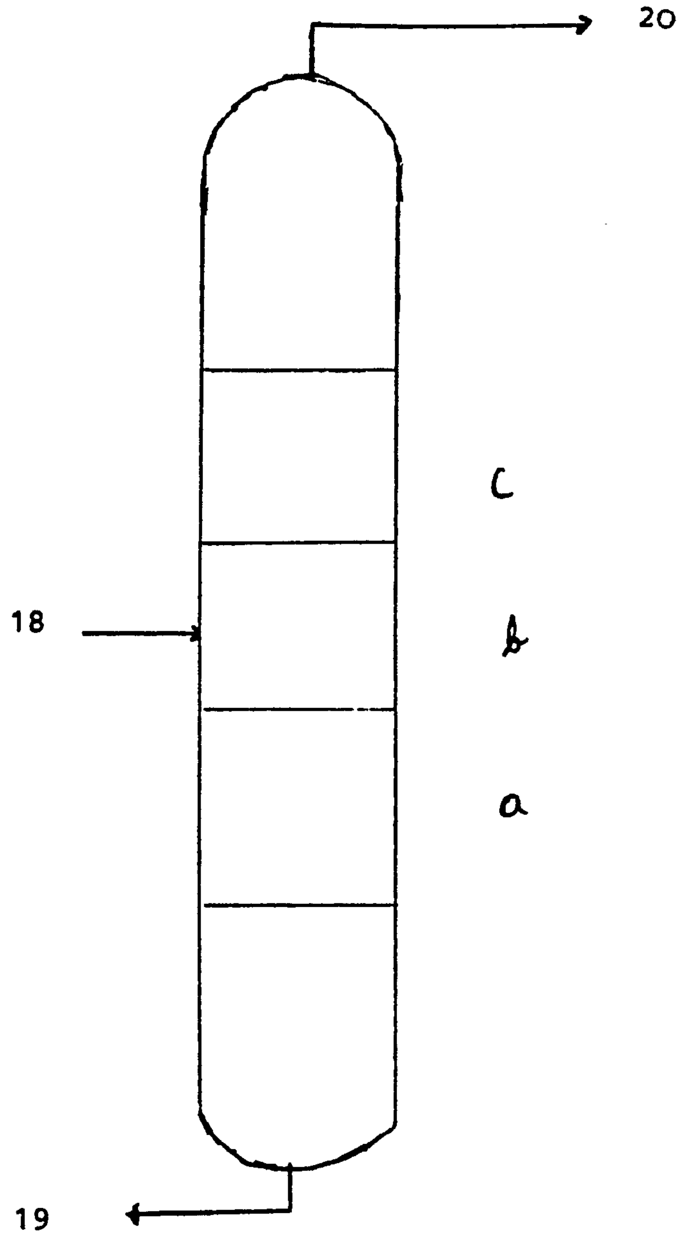


Abb. 1

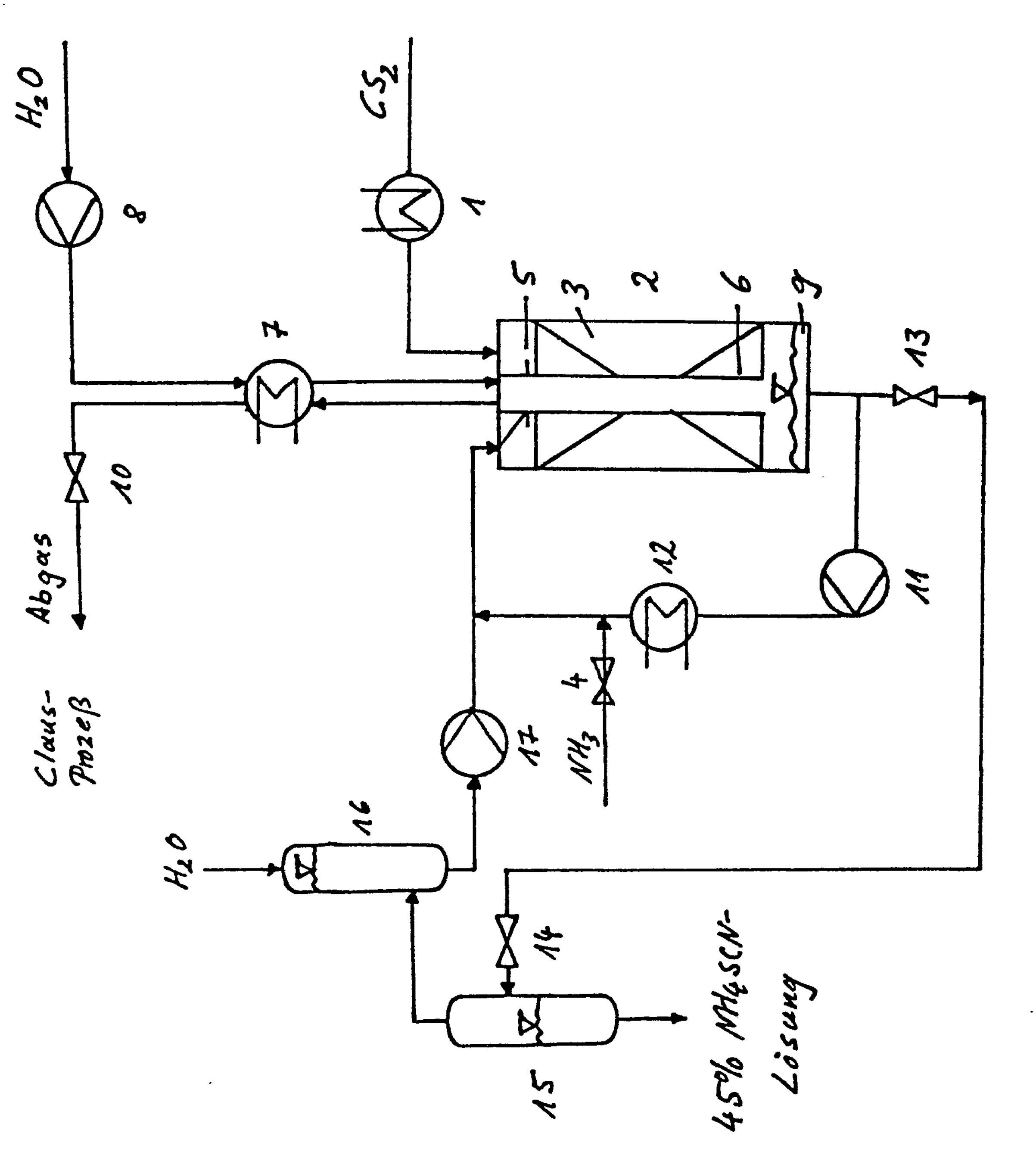
H₂O
CS₂
8
1
7
5
3
2
6
9
13
10
Abgas
Claus-
Prozeß
12
11
4
NH₃
17
16
H₂O
14
15
45% NH₄SCN-
Lösung

Abb. 2